# EUROPEAN PATENT APPLICATION

(11) **EP 0 566 314 A2**
(43) Date of publication of application: **20.10.1993**
(21) Application number: 93302760.9
(22) Date of filing: 07.04.1993
(51) Int. Cl.: A01K 97/02, F41B 3/03

(54) **Fishing catapult**

(30) Priority: 07.04.1992 GB 9207544
(71) Applicant: Elston, David Richard, Rugby, Warwickshire CV22 6NA (GB)
(72) Inventor: Elston, David Richard, Rugby, Warwickshire CV22 6NA (GB)
(74) Representative: Couchman, Jonathan Hugh

(57) **Abstract**

The throwing of fishing bait into the area being fished is conventionally performed by hand or hand held catapult, which requires the fisherman to put down his rod.

An improved bait thrower comprises a mechanical bait thrower adapted to be secured to a fishing box (16) or other support. More particularly, the improved bait thrower comprises a resilient arm (13) which comprises a cup (14) for holding bait and which is releasably mounted on a fishing box (16) through a bracket (12).

## Description

The present invention relates to a catapult for use in throwing fishing bait or other fishing requisites.

While fishing it is necessary to introduce bait into the area being fished. The bait is projected into the area by means of throwing by hand or of a hand held catapult. Such catapults are particularly used for throwing bait over longer distances. Also during fishing it may be desired to throw ledgers, for example.

Throwing or catapulting of bait, for example, normally requires the fisherman to put down his fishing rod, thus interrupting the process of fishing and the fisherman's concentration.

The present invention provides a fishing catapult comprising a resilient arm adapted to be mounted on a support. Usually, the catapult is so adapted at one of its ends. In one preferred embodiment the support is a fishing box, but the support may be any other article capable of providing sufficiently firm support for the catapult. Such supports include chairs, for example wheelchairs, and supports for insertion into the ground.

The resilient arm is preferably adapted to be releasably secured to, for example, a fishing box or chair either directly or through a bracket. The resilient arm preferably comprises a receptacle for holding bait at a free end of the arm.

It is convenient for fishing catapults of the invention to be secured to a support by threaded securing means (e.g. screws or bolts and nuts). Similarly, in the case of fishing catapults securable to the support by a bracket distinct from the catapult itself, threaded securing means are suitable for joining the bracket to the support.

In some embodiments of the invention the fishing catapult is adjustably mountable on the support, for example through an adjustable bracket, whereby the orientation of the fishing catapult relative to the support may be adjusted.

Further included in the invention is the use as a support for a fishing catapult of an article such as, for example, a fishing box, a chair (e.g. a wheelchair) or a support provided with a spike for insertion into the ground. In another aspect the invention resides in an article, especially a fishing box, adapted to support a fishing thrower, for example a catapult. Also included in the invention is a fishing box or a chair having coupled thereto a fishing bait thrower. In other embodiments, the invention resides in a fishing catapult comprising a resilient arm provided with support means, for example a ground insertion spike or rod. Thus, the invention embraces free standing fishing catapults.

The invention further provides a kit comprising a catapult of the invention and a bracket for mounting the catapult on a support.

The invention has been found very suitable for throwing ground bait (maggots).

The present invention is further described by way of example only with reference to the accompanying drawings, in which:
Figure 1 is a side view of a catapult of the invention;
Figure 2 is a perspective view of the bracket of the catapult of Figure 1;
Figure 3 is a perspective view of the catapult of Figure 1 when secured to a fishing box;
Figure 4 is a perspective view of a second embodiment of the invention; and
Figure 5 is a side view of the catapult of Figure 4.

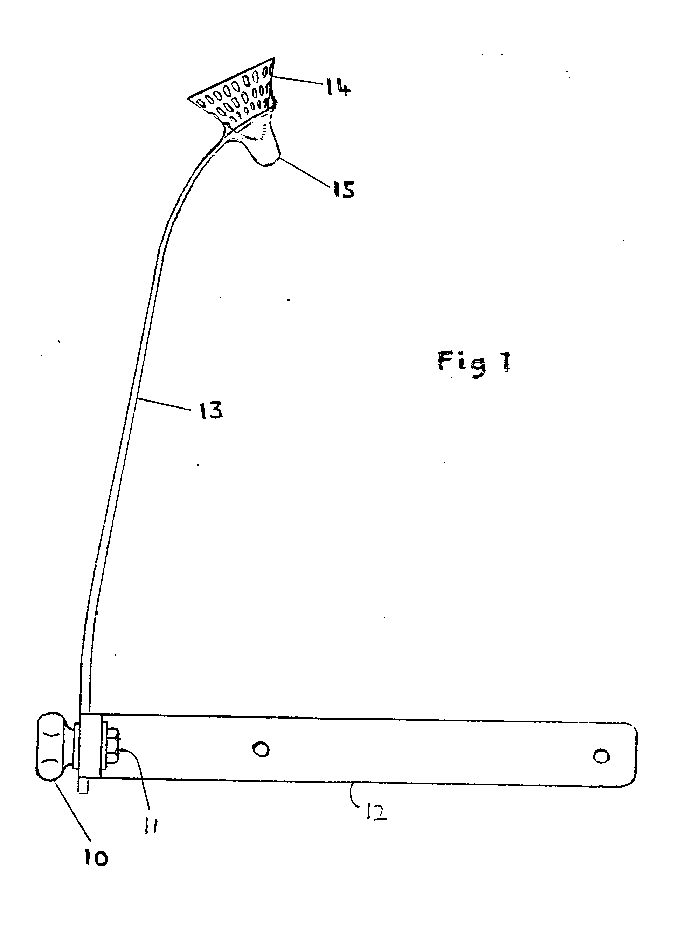

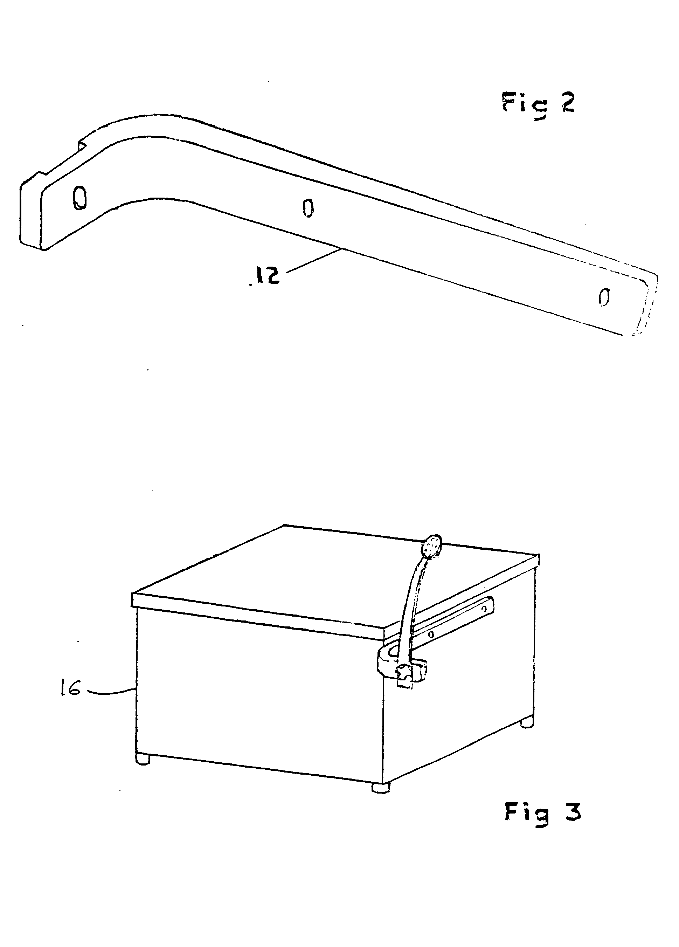

Figure 1 shows a catapult comprising a resilient member in the form of an arm 13 for projecting bait. The arm may be made of any suitable resilient material, for example metal or plastics. The arm is shown to be made in one piece. At its lower end, the arm 13 is secured to a bracket 12 which, in turn, is in use secured to a support such as a fishing box 16, as shown in Figure 3. As an alternative to a discrete bracket 12, the arm 13 could be provided with means to enable it to be mounted directly on a support. Needless to say, other supports than a fishing box may be used, for example a chair or wheelchair.

In use, bait is placed on the upper, free end of the arm 13. The arm 13 is pulled back (to the right in Figure 1) to apply tension thereto and is released, so that it springs forward and throws the bait. The arm is therefore preferably provided with a receptacle 14 for the bait, such as a cup as illustrated, for example. The arm 13 is also conveniently provided at its free end region with a handle or tab for pulling on, as shown at 15, for example.

The arm 13 is shown to be secured to the bracket 12 by means of a bolt 11 and star nut 10, but alternative releasable securing means may be used in their place.

The illustrated bracket 12 comprises a first portion to be mounted on a fishing box 16 or other sufficiently firm support and, at right angles to the first portion, a second portion to which the resilient arm 13 is to be mounted. The bracket 12 may therefore be secured to the side of a fishing box as shown in Figure 3 with an attached resilient arm 13 directed forward to throw the bait. The bracket 12 may be secured to either side of the fishing box 16, depending on whether the fisherman is right or left handed. Normally it is secured to the left of the fishing box 16 so that a right handed fisherman may operate the catapult with his left hand while continuing to hold the rod with his right hand. If desired the bracket may be adjustably secured to the support or the resilient arm adjustably secured to the bracket, whereby the resilient arm may be held at differing angles orthe length of the arm between the bracket and the bait receptacle may be varied.

In other embodiments the bracket is designed to be fitted to the front of the fishing box 16.

In the embodiment of Figures 1 to 3, the bracket 12 is screwed or bolted to a conventional fishing box 16. However, if desired, the fishing box 16 may be adapted for mounting of a catapult thereon. For example, the fishing box 16 could be provided with a runner onto which a bracket could be slid, or it could have a permanent holder for the resilient arm 13.

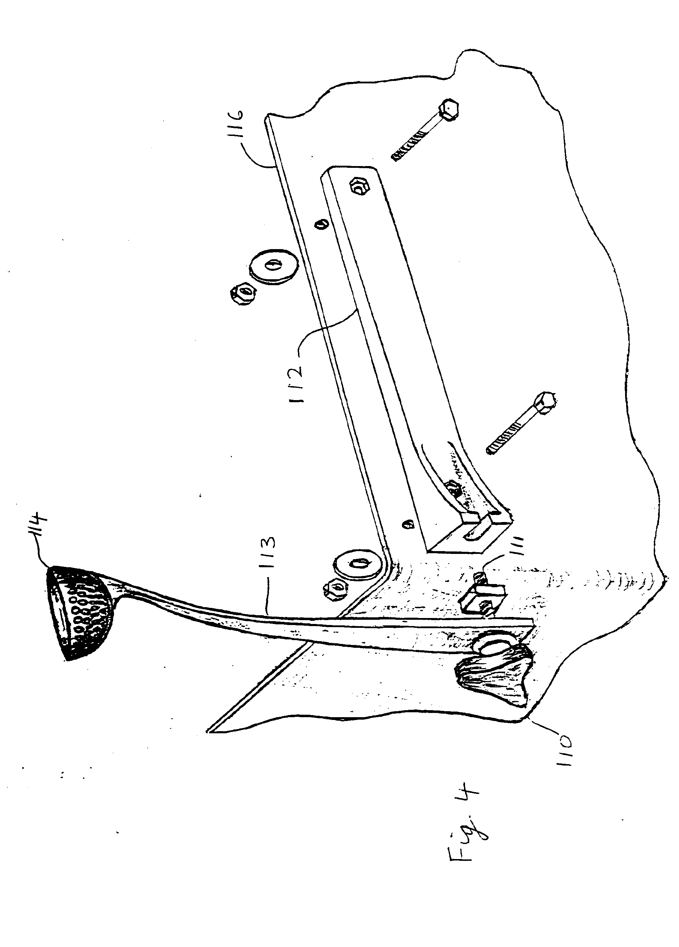

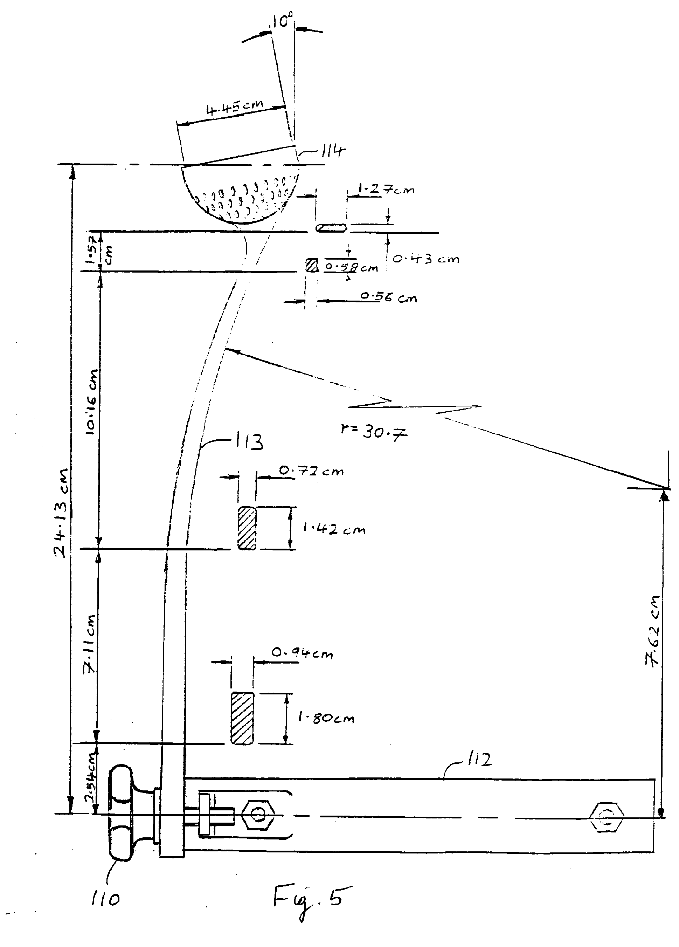

A second embodiment of the invention is shown in Figures 4 and 5, in which like parts to those of the embodiment of Figures 1 to 3 are indicated by the same reference numeral increased by 100.

The catapult of Figures 4 and 5 comprises a resilient injection moulded nylon arm 113 which may be secured at its base to a bracket 112, which in turn has been mounted on a fishing box 116. At its top, the arm 113 comprises a cup 114 to contain bait or other material to be thrown by the catapult. The cup 114 has oval holes formed in a lower area of the cup. The cup 114 is oriented forwards at an angle of 10 ° relative to the straight base portion of the arm 113. Otherdimen- sions are shown by way of example in Figure 5, where "r" is the radius of curvature of the top portion of the arm 113.

The catapult is operated by pulling back the arm 113 at its top, just below the cup 114, then releasing it.

The distance overwhich the bait is thrown can be changed by changing the tension applied to the arm 13, 113. It has been found in practice that, with very little experience, a fisherman can accurately assess the tension to be applied to project bait a desired distance. However, to help ensure throwing of bait over the correct distance, a gauge may be used to measure the distance to which the arm 13 is pulled back. For example, there may be secured to the bracket an arcuate strip bearing markings for indicating the distance by which the arm 13 has been pulled back. Such a measuring strip may be used for consistently pulling the arm back by the same extent.

The mechanical bait thrower illustrated in the drawings has the advantage of enabling bait to be projected without the fisherman putting his rod down. At the same time, the device is of simple and therefore economic construction. The catapult may be fitted to any conventional fishing box and, by separating the throwing arm 13 from the bracket 12, the arm 13 and bracket 12 may readily be stored or transported in a compact space.

The invention embraces alternative mechanical bait throwers which are secured to a fishing box or chair. Preferably, such bait throwers are of a catapult- type, like the illustrated device, that is they rely on a spring mechanism to throw the bait.

The illustrated bait thrower may also be used to throw other fishing requisites, for example ledgers.

## Claims

1. A fishing catapult comprising a resilient arm (13) adapted to be mounted on a fishing box (16) or other support.

2. Afishing catapult of claim 1, wherein the resilient arm (13) is adapted to be mounted on the support (16) through a discrete bracket (12).

3. A fishing catapult of claim 1 or claim 2, wherein the resilient arm (13) is adapted at one end to be mounted on the support and at its other end comprises a receptacle (14) for bait.

4. A fishing catapult of any of claims 1 to 3 which is adapted to be detachably mounted on the support (16).

5. A fishing catapult of any of claims 1 to 4 which is made in one piece.

6. A fishing catapult of any of claims 1 to 5 which is secured to a fishing box or to another support.

7. A kit comprising a fishing catapult of any of claims 1 to 5 and a bracket for mounting the catapult on a support.

8. The use to throw fish bait or other fishing requisite of a resilient arm supported by support apparatus.

9. The use of claim 8 wherein the support apparatus comprises a fishing box (16) and/or the resilient arm (13) is adapted at one end to be mounted on the support and at its other end comprises a receptacle (14) for bait.

10. Afishing box (16) ora chair having coupled thereto a fishing bait thrower, the thrower optionally being a catapult, the catapult optionally being as defined in any of claims 1 to 5.
